# EUROPEAN PATENT APPLICATION

(11) **EP 3 185 103 A1**
(43) Date of publication of application: **28.06.2017**
(21) Application number: 15307106.3
(22) Date of filing: 22.12.2015
(51) Int. Cl.: G06F 3/01, G06F 3/0481

(54) **A GAZED VIRTUAL OBJECT IDENTIFICATION DETERMINATION MODULE, A SYSTEM FOR IMPLEMENTING GAZE TRANSLUCENCY, AND A RELATED METHOD**

(71) Applicant: ALCATEL LUCENT, 92100 Boulogne-Billancourt (FR)
(72) Inventor: STEVENS, Christoph, 2018 Antwerpen (BE); TYTGAT, Donny, 2018 Antwerp (BE)
(74) Representative: ALU Antw Patent Attorneys

(57) **Abstract**

The present invention relates to a method, system and related devices for implementing gaze translucency on a display configured to display to a user a virtual scene representation of a virtual scene on said display where the virtual scene representation comprises virtual object representations of virtual parent objects. Each virtual object of said parent objects may be virtual parent object or a virtual child object.

The system of the present invention comprises a gaze capture means that is configured to capture gaze information of said user, said gaze information comprising gaze coordinates representing a position on said display at which said user is looking and a gazed virtual object identification determination module in turn comprising a mapping means that is configured to map vertices of said virtual scene representation to a respective position at said display and an Object identification Retrieving Means being configured to retrieve an object identification associated with a vertex mapped onto a position at said display matching said gaze coordinate and the system according to the present invention further comprises an object determination means that is configured to determine said object gazed at based on said object-identification associated with a vertex mapped onto a position of said display matching said gaze coordinate.

## Description

### FIELD OF THE INVENTION

The present invention relates to the field of gaze translucency systems, and in particular to a system for implementing gaze translucency on a display configured for displaying to a user a virtual scene representation of a virtual scene, said virtual scene representation comprising a number of virtual object representations of virtual objects; a method for the same; a computer program for the same; a gaze distance determination module and a virtual object modification module.

### TECHNICAL BACKGROUND OF THE INVENTION

Eye gaze is a useful element when communicating in group with three or more people. The eye gaze information is useful for the person talking, in order to direct his attention to a specific person and to get feedback from him; for the listeners, in order to understand who the speaker is talking to and whom (or what) the other listeners are looking at; and for turn-taking. As such, people can see each other, they know that other people can see them, and they know that the other people know that they can see them. This reciprocal characteristic is referred to as gaze translucency.

In face-to-face conversations, the eye gaze of an individual is easy to detect. However, in today's multi-party video calls (Computer Mediated Communications), all participants are looking almost directly into their small monitor at the (mosaic of) other people whereby eye gaze direction is almost completely lost. All the advantages of gaze translucency are therefore lost. Moreover, each individual feels as if every other participant is looking directly at him. All participants therefore feel that they get much more attention than they would normally attract or deserve in the given social setting.

In other settings, gaze translucency is useful to determine whether or not participants are looking at whatever they should be looking. For example, in a classroom setting in which a virtual scene is displayed containing virtual objects, one of which should be paid attention to, the teacher would like to ensure that the students are looking at that virtual object of that virtual scene that is the subject of teaching.

In other settings, such as automotive, e-health or gaming settings, it may be useful to capture information about what things an agent is looking at, and to support or redirect that agent's attention as necessary. A car driver would profit, for example, from having his attention directed to important road signs or potentially dangerous elements on the road. A driver or pilot may find it useful to have her attention gently directed to a flashing warning sign on an intelligent instrument panel.

If individual ornaments can be identified by a module and such additional information is not taken into account and, valuable information is lost: a first user will not know what ornament of the user, i.e. a ring, a tattoo, a facial expression or parts of the face or object representation a second user is looking at and eventually the gaze at the ornament of a user might lead to mutual gaze is not occurring.

Todays Computer Mediated Communications CMC devices do not reveal gaze translucency of the users to the other users. A current solution provides an approach to identify the gazed at virtual object in the scene through a display or Virtual reality goggles or other alternatives with the need of application of raytracing. Such solution essentially applies a means configured to execute raytracing in a gaze translucency architecture for determining the virtual objects that are gazed at. Moreover In order to identify the sub- or child objects from a parent object most likely that multiple ray traces are necessary which multiplication of required ray traces complicates the solution.

### SUMMARY OF THE INVENTION

An objective of the present invention is to provide with a method, a system and related devices for implementing gaze translucency on a display configured to displaying to a user a virtual scene representation of a virtual scene, but wherein the aforementioned shortcoming or drawbacks of the known solutions are alleviated or overcome.

Accordingly, embodiments of the present invention relate to a gazed virtual object identification determination module being configured to identify, for a user, an object-identification of a gazed at virtual object of virtual objects, based on captured gaze information, said captured gaze information comprising gaze coordinates representing a position at said display at which said user is looking, said display being configured to display a virtual scene representation of a virtual scene, said virtual scene representation comprising virtual object representations of virtual objects, where such virtual object may be a virtual parent objects or a virtual child object, wherein gazed virtual object identification determination module comprises
mapping means configured to map vertices of said virtual scene representation to a respective position at said display and Object identification Retrieving Means, configured to retrieve an object identification associated with a vertex mapped onto a position at said display matching said gaze coordinate.

Correspondingly, embodiments of the invention relate to a system for implementing gaze translucency on a display configured to display to a user a virtual scene representation of a virtual scene on said display, said virtual scene representation comprising virtual object representations of virtual objects, where such virtual object may be a virtual parent object or a virtual child object, wherein said system comprises a gaze capture means, configured to capture gaze information of said user, said gaze information comprising gaze coordinates representing a position at said display at which said user is looking, gazed virtual object identification determination module according to claim 1 and an object determination means configured to determine said object gazed at based on said object-identification associated with a vertex mapped onto a position at said display matching said gaze coordinate.

Still an embodiment of the present invention relates to a Computing device comprising a gazed virtual object identification determination module according to claim 1.

Still an embodiment of the present invention relates to a Server comprising a gazed virtual object identification determination module according to claim 1.

An embodiment of the present invention relates to a method for implementing gaze translucency on a display configured to display to a user a virtual scene representation of a virtual scene on said display, said virtual scene representation comprising virtual object representations of virtual objects, where each such virtual object may be a virtual parent objects or a virtual child object, wherein said method comprises the steps of:
- capturing gaze information of said user, said gaze information comprising gaze coordinates representing a position at said display at which said user is looking, mapping each vertex of said 3d virtual scene representation to a position at said display and retrieving an object identification associated with a vertex mapped onto said position at said display matching said gaze coordinate.

An embodiment of the present invention relates to a Computer program comprising computer executable instructions configured to perform when executed, the steps of method according to claim 13.

Indeed, by mapping vertices of said 3dimensional virtual scene representation onto a respective position of said display and capturing gaze information of said user where said gaze information comprises gaze coordinates which represent a position at said display at which said user is looking and subsequently retrieving the object identification that is associated with a vertex mapped onto the position at said display matching said gaze coordinate, which is followed by determining said object gazed at based on the retrieved object-identification associated with the vertex mapped onto the position at said display matching said gaze coordinate from a repository or database comprising a table with the object-identification and optionally with additional object information. Such additional information may comprise the object name, object class, activity information (the object is moving, running, talking, ...), etc., hierarchy information, i.e. information on the hierarchy of gazed at object forms part of, such as being into a parent or child relation of further objects in the virtual scene, application-specific information such as whether the looked-at position is a person or an object (where looking at a person might for example trigger an action), activity information (looking at someone who is looking at you might trigger an action), etc.

Each object-representation included in the virtual scene representation of a virtual scene on said display comprises a plurality of vertices, each vertex being a point of the object representation. The plurality of vertices being connected in an orderly fashion so these represent a piecewise-linear estimation to the objects. Most used are triangle based meshes (3 vertices connected resulting into one triangle) and quad-based meshes (4 vertices connected resulting into a so-called "quad"). Note that other representations such as point clouds can be used without loss of generality.

Furthermore, vertices being each being a 3 dimensional point in the 3 Dimensional space of virtual scene are mapped onto a respective position of the display, being in the 2 dimensional space. Due to occlusions not all vertices of objects included in the virtual scene representation are mapped onto the display DP. Not each vertex is mapped to a 2D location (e.g. if occluded) and some 2d locations are not directly mapped to a vertex, but its value, i.e. the corresponding object identification and optionally the additional information, is interpolated from multiple vertices via its connectivity (e.g. triangle meshes).

Vertices of the plurality of vertices are assigned an object-identification where such object identification identifies the object the vertex forms part of. In order to add this information to the objects, new vertex attributes are defined that are attached to each vertex of the plurality of vertices of a vertical scene representation.
(https://www.opengl.org/sdk/docs/tutorials/ClockworkCoders/attributes.php). For each vertex of the object in this space additional info is attached such as its object-identification. This may be performed, either by means of storing such an object identification in a 32bit value attribute associated to a vertex or alternatively conveying such an object-identification by means of the Alpha channel where the meant information, the object-identification and further additional information is conveyed towards the display included in the RGBA information. As said, this additional info may consist of the name of the object it belongs to, optionally in combination with additional information such as data on the virtual object hierarchy: e.g. on the belonging parent virtual object or the associated child virtual objects.

Such, 3-Dimensional virtual object representation may be rendered in a way that is common on nowadays GPU hardware. Such additional vertex attributes conveying the object identification of the corresponding virtual object is transformed from the 3-dimensional virtual object representation into the 2-Dimensional domain, i.e. the representation of the virtual scene at the display in a similar manner as the colour information. Furthermore, the gaze information of said user is captured, for instance, but not limited to, by means of an eye-tracking means, where said gaze information comprises gaze coordinates representing a position at said display at which said user is looking. Alternatively, such gaze information may be extracted from information resulting from the analysis of the captured visual activity from the brain.

Subsequently, the object identification that is associated with the vertex that is mapped onto a position at said display that matches the gaze coordinate is retrieved from a repository, database, and a networked information source. The object-identification may be retrieved from the vertex attribute associated with the vertex that is mapped onto a position at said display that matches the gaze coordinate or alternatively retrieved from an alpha channel that conveys the object-identification for each vertex of a virtual scene representation.

Based on the retrieved object-identification that is associated with a vertex mapped onto a position of said display matching said gaze coordinate P the corresponding object is determined from an repository holding a information on the corresponding object, the parent object of the meant object and optionally further information such as hierarchy information, i.e. information on the hierarchy the gazed at object forms part of, such as being into a parent or child relation of further objects in the virtual scene, application-specific information such as whether the looked-at position is a person or an object (where looking at a person might for example trigger an action), activity information (looking at someone who is looking at you might trigger an action), etc.

Additionally the latter may be combined with info obtainable from techniques based on point cloud or mesh segmentation in order to dynamically support scene changes.

In the present specification, the significance of 'gaze translucency' is intended to be 'the ability to capture information about what agents are looking at'. An 'agent' can be a human being, an animal or an inanimate object, or more generally any entity that is capable of 'gazing', including virtual objects and virtual cameras. For human beings and animals, 'gazing' is well-defined. For inanimate objects and virtual objects, the skilled person will understand that 'gazing' must be interpreted technically according to the specific setting.

In the present specification, the significance of a virtual scene is intended to be an aspect of a virtual world as it is experienced by a user. Said virtual world may be purely virtual (*e.g.* as in video games) or may be an augmented reality by virtually representing real-world entities (*e.g.* as in an enhanced automotive use setting, where real-world road indications or potential dangers are represented on a wind screen, for instance to highlight their importance). The virtual world may comprise virtual objects, including any of the following: human beings, animals, or inanimate objects, such as trees, motor parts or road signs.

The skilled person will understand that these virtual objects may gaze back at the user (or at a virtual object associated with said user).

In the above described setting of a driver having her attention drawn to a flashing warning sign on an intelligent instrument panel, the skilled person will appreciate that this is possible by having virtual objects represented on said panel gaze at the driver. The driver is aware that such intelligent panels can see what she is gazing at, and, as soon as the driver gazes back at the panel, the accountability is established.

Said aspect of a virtual world can be called a virtual scene, typically as viewed by a virtual camera. This virtual scene may comprise some (or all) of the virtual objects of said virtual world. The virtual scene may be displayed on a display as a virtual scene representation, comprising virtual object representations of those virtual objects of said virtual scene that are in view of the virtual camera (*e.g.* inside a view frustum) for its corresponding user.

Further, it will be appreciated by the skilled person that a 'display' may refer to any means for visualizing (*i.e,* provide perception of) a virtual scene, including *e.g.* a computer monitor, a television screen, a smartphone display, virtual reality goggles, a holographic projection (for holograms), a wall projection, a projection on an eye or retina, a wind screen projection, a helmet visor display, a contact lens display, a bionic eye, a brain-computer interface, etc.

A further embodiment of the present invention relates to a gazed virtual object identification determination module according to claim 1, wherein said Object identification Retrieving Means, is configured to retrieve said object identification from an alpha channel associated with said position at said display matching said gaze coordinate.

In a further embodiment of the present invention, said object-identification can be retrieved, by means of Object identification Retrieving Means, from an alpha channel that is associated with said a point at said display matching said gaze coordinate.

An alternative embodiment of the present invention relates to a gazed virtual object identification determination module according to claim 1, wherein said Object identification Retrieving Means is configured to retrieve said object identification from a vertex attribute assigned to a vertex mapped onto a position at said display matching said gaze coordinate.

In an alternative embodiment of the present invention said object-identification can be obtained, by means of Object identification Retrieving Means, from a vertex attribute that is assigned to a vertex mapped onto a point at said display matching said gaze coordinate.

Another embodiment of the present invention relates to a system for implementing gaze translucency according to claim 4, wherein said system further comprises a gaze translucency algorithm module configured to assign a modification command to at least one of said gazed virtual object, based on said identified gazed virtual child object.

In a further embodiment of the present invention the system further comprises a gaze translucency algorithm module configured to assign a modification command to at least one of said virtual child object and said virtual parent object, based on said identified gazed virtual object and optionally based on the additional information assigned to the object-identification.

Accordingly, by assigning distinct modification command to at least one of said virtual child object and said virtual parent object, based on said identified gazed virtual child object, this at least one of said identified virtual child object and said associated virtual parent object can be assigned distinct kinds of commands for modification which may imply the differentiating of this at least one of said virtual child object and said virtual parent object over the entire virtual scene in order to enable an improved presentation of at least one of said virtual child object and said virtual parent object the user is gazing at.

In other words the modification command for child and parent will most likely be different since we want the child and parent rendered differently. Hence it should be clear at which child object the user is looking while still indicating the child and parent relationship, the parent should be informed that at one of its child objects is being looked at by another user which might also eventually establish the mutual gaze of the parent of the user being looked at and the initial user gazing at the child.

In another embodiment of the present invention the system further comprises a virtual object modification module configured to modify said at least one of an identified virtual child object and/or virtual parent object, based on their assigned modification command.

In other words the modification for the child object representation and parent representation will most likely be different since we want the child and parent to be rendered differently. It should be clear at which child object the user is looking while still indicating the child and parent relationship. The parent object representation should be informed that at one of its child objects is being looked at by another user which might also eventually establish the mutual gaze of the parent between the user being looked at and the initial user gazing at the child object.

Still another embodiment of the present invention relates to a system for implementing gaze translucency according to claim 5, wherein said system further comprises a virtual object modification module configured to modify said at least one of an identified gazed virtual object, based on an assigned modification command.

Accordingly, by factually modifying said at least one of said virtual child object and said virtual parent object, based said assigned-to modification command, said identified gazed virtual child object is possibly modified in accordance with its own modification command which may imply the differentiating of the gazed at, at least one of said virtual child object and said virtual parent object over the entire virtual scene in order to enable an improved factual presentation of this at least one of said virtual child object and said virtual parent object, the user is gazing at.

Further characterizing embodiments of the present method it is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. This means that there exists a path between an output of A and an input of B which may be a path including other devices or means.

### BRIEF DESCRIPTION OF THE DRAWINGS

The above and other objects and features of the invention will become more apparent and the invention itself will be best understood by referring to the following description of an embodiment taken in conjunction with the accompanying drawings wherein:
Figure 1 represents the functional structure of a user device UD and a server device SE according to an embodiment of the present invention; and
Figure 2 represent the functional structure of the gazed virtual object identification determination module; and
Figure 3 illustrates a set-up for a 3D virtual scene of a system embodiment according to the present invention.

In the figures, like or similar elements have been numbered equally or analogously.The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

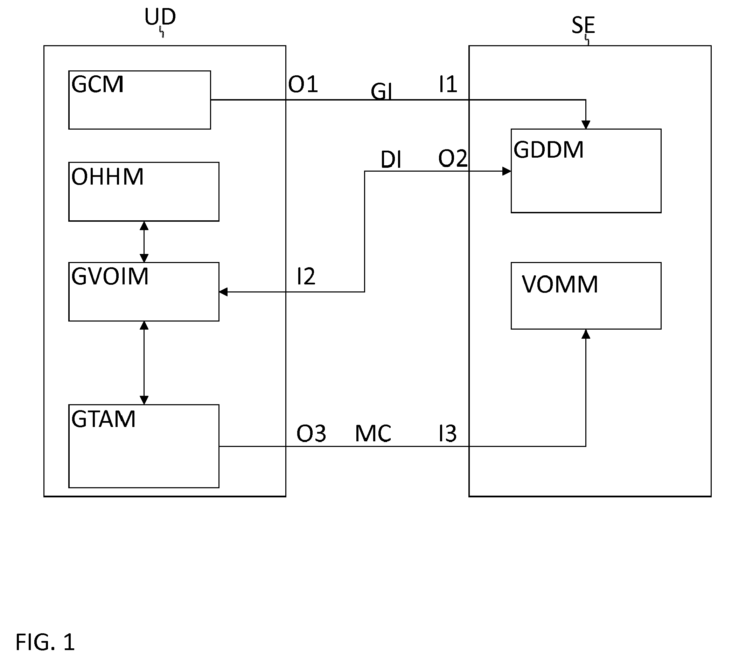

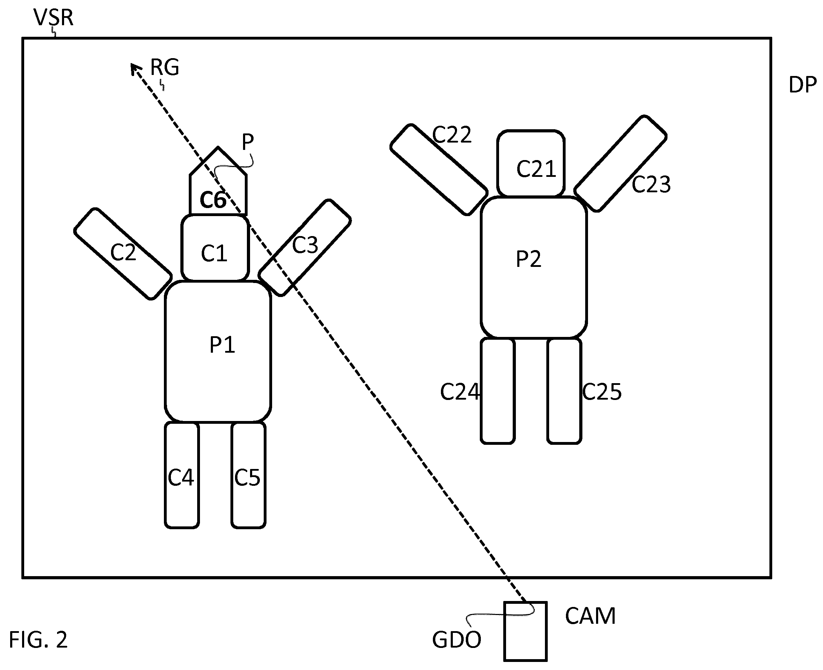

In the following paragraphs, referring to the drawing in FIG.1, an implementation of the system for implementing gaze translucency on a display configured to display to a user a virtual scene representation VSR according to an embodiment of the present invention is described. In a further paragraph, all connections between the elements of the system according to the present invention are defined. Subsequently all relevant functional means of the mentioned system as presented in FIG.1 are described followed by a description of all interconnections. Additionally, the functional means of the gazed virtual object identification determination module as presented in Fig.2 is described.

Subsequently, referring to the drawing in FIG.3, representation of virtual objects P1, P2 is described.

In the succeeding paragraph the actual execution of the system is described.

Essential elements of the system of the present invention are a first entity, e.g. being a user device UD associated with a user, said user device being a computing device being configured to implement gaze translucency on a display DP of said user device UD that is configured to display to a user a virtual scene representation VSR of a virtual scene where, said virtual scene representation comprises virtual object representations P1, P2 of virtual parent objects; each virtual parent object of said virtual parent objects comprising at least one virtual child object. Such user device UD being a device configured to conduct a video conference, such user device comprising a display (that may consist of multiple monitors) adapted to visualize representations of a plurality of users, i.e. conference participants; a camera or a set of cameras to record a representation of the user that is associated with the user device and eye gaze tracking means, configured to repeatedly or continuously detect a gazing direction of a user of the user device, where such user device UD may be a personal computer like a desktop or laptop computer, a tablet PC a mobile phone like a smart phone or alternatively be a head mounted display for visualization and sensory input, a car, or any form or combination of user device(s) capable of rendering, visualizing a scene combined with possible sensory input to capturing eye gaze information. Amongst them contact lenses with integrated electronics and a brain interface. The latter functionality of the user device could also fully or partly be integrated with the human body.

A further essential element of the present invention is a second entity, e.g. being a server SE that is configured to generate this mentioned virtual scene representation VSR of a virtual scene, where the virtual scene representation comprises a virtual object representations P1, P2 of virtual parent objects; each virtual parent object of said virtual parent objects comprising at least one virtual child object.

It is to be noted that the functionality of respectively, the client device UD and server SE may be mixed since any combination of the functionality may exist on the client i.e. the user device UD as well as on the server SE, the user device may additionally contain a means for recording an image of the user and where the user is looking at, and/or means for rendering the VSR.

Such user device UD may be coupled to Server Device SE over a communications network able to support remote video communication sessions where such communications network may include an xDSL, xPON, WMAN, LAN, 3G link or other fixed or mobile connection such as Wi-Fi, Bluetooth, GSM, UMTS 4G etc or any combination of the previous communication networks.

If the rendering happens at a device from which the different video streams are sent to the client devices we have a client server architecture, this however doesn't scale so well depending on the rendered representation of the VSR (1^{st} or 3^{rd} person view). These days, every device is capable of rendering its own view with personal viewpoint and hosting some central part(s) of the gaze translucency architecture it will be more robust and scale better, so that e.g. the gazed virtual object modification module VOMM can be part of the client device. Currently, most mobile or fixed platform have a GPU capable of rendering a virtual scene and perform the gaze translucency algorithm, only a stream of the 3-dimensional object and it's movement, and which user is looked at needs to be streamed and distributed and handling these streams will be most probably a central piece which could be part of a server.

In this embodiment of the system according to the present invention, the user device UD comprises a gaze capture module GCM, a gazed virtual object identification determination module GVOIDM together with an object determination module ODM and a gaze translucency algorithm module GTAM.

The gaze capture module GCM is configured to capture a user's gaze information GI comprising gaze coordinates, said gaze coordinates may represent a position on a display at which said user is looking or gazing (not shown). The captured gaze information comprising gaze coordinates P representing a position at said display at which said user is looking, said display being configured to display a virtual scene representation VSR of a virtual scene, said virtual scene representation comprising virtual object representations P1, P2 of virtual objects; (such virtual objects may represent virtual parent objects comprising at least one virtual child object or alternatively a virtual child object).

An embodiment of such gaze capturing means GCM may be included in Diff Displays see http://sachi.cs.st-andrews.ac.uk/research/software/diffdisplays/ wherein the system that is able to track which display you are looking at, using a web camera. Another alternative embodiment of such gaze capturing means GCM may be a Tobii eye tracker wherein the gaze direction can be measured with a precision of 1 degree. This makes it possible to drive the eyes of the user's representation also more precisely. Further alternative embodiments are Miramtrix or other Hardware trackers, webcams in combination with software trackers and Do-It-Yourself eye-tracker (DIY setup), and devices capable of eye and/or head tracking , devices capable of capturing brain signals and head-mounted displays with eye- and/or head tracking.

The gazed virtual object identification determination module GVOIDM is configured to
identify, for a user, an object-identification of a gazed at virtual object (of a virtual parent object) of virtual parent objects, based on captured gaze information where the gazed virtual object identification determination module GVOIDM that comprises a mapping means MM that is configured to map vertices of said 3 dimensional virtual scene representation onto a respective position at said display DP and additionally, by means of the Object identification Retrieving Means OIRM that is configured to retrieve an object identification associated with a vertex mapped onto a position at said display matching said gaze coordinate P.

The user device UD additionally comprises an object determination means ODM being configured to determine said object gazed at based on said object-identification associated with a vertex mapped onto a position at said display matching said gaze coordinate P.

The gaze translucency algorithm module GTAM is configured to assign to one or more of said virtual objects a modification command, based on said identified gazed virtual objects.

The server SE, in this embodiment, comprises a virtual object modification module VOMM.

The virtual object modification module VOMM is configured to modify one or more virtual objects of said number of virtual objects, based on said modification command MC assigned by the gaze translucency algorithm module GTAM.

The gaze capturing means GCM of the user device UD has an output that is coupled to an input of the gazed virtual object identification determination module GVOIDM that in turn is coupled with an output that is coupled to an input of the object determination means ODM. The object determination means ODM further has an output that is coupled to an input of the gaze translucency algorithm module GTAM. The gaze translucency algorithm module GTAM has an output that is at the same time an output-terminal O1 of the user device UD.

Furthermore, the server SE has an input-terminal that is at the same time an input of the virtual object modification module VOMM.

The gazed virtual object identification determination module GVOIDM as presented in Fig. 2 has an input-terminal I1 that is at the same time an input to the mapping means MM that in turn is coupled with an output to an input of the identification Retrieving Means OIRM. The identification Retrieving Means OIRM furthermore possess an output that is at the same time an output-terminal O1 of the gazed virtual object identification determination module GVOIDM. The skilled person will understand that these modules may be otherwise implemented, for instance as interface implementations by one or more virtual object (or rather program code instances representing virtual objects). A gaze translucency algorithm module GTAM may be comprised by a third entity or further entity, for instance a central server. Further, another virtual object modification module VOMM' may be applied being comprised by a fourth entity or further entity. Moreover, the skilled person will appreciate that the arrows shown to cross from one entity to another may in practice be implemented as communications between the separate (distributed) entities, via a network, using various network modules configured to transmit and receive information to each other.

Figure 3 illustrates a set-up for a 3-Dimensional virtual scene of a system embodiment according to the present invention. The figure shows a virtual camera CAM, a display DP displaying a virtual scene representation VSR, (shown as a perspective continuation from a virtual camera CAM). The virtual scene representation VSR is in this case a 2-Dimensional projection of a 3-Dimensional; virtual scene that can be managed by a 3D engine (not shown), but the skilled person will understand that the virtual scene representation VSR can be referred to as a '3D scene', in view of its nature. The virtual scene representation VSR comprises a number of virtual object representations P1, P2.

Correspondingly, the underlying virtual scene comprises virtual objects: virtual parent object P1 being the representation of a person, where the parent object is built up of a plurality of virtual child objects being denoted with C1...C6, respectively being the head, the arms, the legs and a helmet. Further virtual parent object being virtual parent objects P2, again being the representation of a person each having a similar structure. Each of the virtual objects P1 and P2 and each of the respective corresponding virtual child objects C1..C6, C21..C25, being located in the in the 3 dimensional virtual environment, comprise a plurality of vertices being connected in an orderly fashion so these represent a piecewise-linear estimation to the objects. Most used are triangle based meshes (3 vertices connected resulting into one triangle) and quad-based meshes (4 vertices connected resulting into a so-called "quad"). Note that other representations such as point clouds can be used without loss of generality.

The skilled person will appreciate that due to the position and orientation of the virtual camera CAM, the two separate virtual objects are mapped and hence rendered largely on the same surface area of display DP, as virtual object representations P1 and P2. For this reason, it is not immediately evident which of both virtual objects a user (not shown) is gazing at.

In order to explain the present invention first, it is assumed that a user is gazing at the helmet, being virtual child object C6, of the person A being represented by the virtual object P1. As it is not immediately evident, to a further user, which of the virtual objects and moreover which part of the gazed virtual object a user (not shown) is gazing at.

At first, a user gazes at the displayed virtual scene representation VSR which in this embodiment is displayed at a screen of a user device UD, e.g. embodied by a personal computer. This user device UD further may comprise a gaze capture module GCM that is configured to capture gaze information of said user where the gaze information comprises gaze coordinates P representing a position at said display at which said user is looking. The gaze capture module GCM may be implemented by an eye-tracking means or via a brain interface by interpreting the signals from the human visual system.

The user's gaze is taken, by the gaze capturing means GCM, to be at a position P on said display DP. The gaze capture module GCM is configured to capture gaze information comprising gaze coordinates representing said position P. For ease of illustration reference, the gaze coordinates (which may for instance be display position coordinates, or any other type of coordinates that can unambiguously represent which position on a display a user is gazing at) are here taken to coincide with the display position P, i.e. the gaze coordinates are also indicated on the figure as reference number P.

The gazed virtual object identification determination module GVOIDM, by means of the mapping means MM, maps vertices of said 3-dimensional virtual scene representation onto a position at said display. It is now assumed that the helmet C6 is mapped onto the display DP and that point P is located within the shape of the helmet C6 and that also a vertex forming part of the virtual representation of the helmet C6 is mapped onto a display DP at location P of the display DP.
Hence based on the capturing gaze information of said user where said gaze information comprises gaze coordinates which represent position P on said display DP at which said user is looking and subsequently retrieving the object identification that is associated with a vertex mapped onto the position of the display that matches the gaze coordinate P. This object identification may be associated with the vertex of the plurality of vertices by means of a special attribute that is attached or connected with each vertex of the plurality of the vertices. This attribute may be a means of storing such an object identification in a 32bit value attribute associated to a vertex. In future such attribute size may increase enabling the storage of a larger object-identification, which larger object-identification hence enabling the identification of a larger number of possible virtual objects.

Subsequently, the Object identification Retrieving Means OIRM forming part of the gazed virtual object identification determination module GVOIDM, retrieves an object identification that is associated with the vertex mapped onto a position P of the display DP. The Object identification Retrieving Means OIRM retrieves the object-identification from a repository which may comprise a table including each vertex of the plurality of vertices where each vertex is associated with a corresponding object-identification. It is to be noted that vertices corresponding to a single object are assigned the same object-identification. Hence all vertices corresponding to object C6 are assigned the same object-identification. Hence, based on the vertex associated with the position P of the display DP the object identification of the object displayed at display DP at location with gaze coordinates P, being the helmet C6, the object location is retrieved from the mentioned repository.

In case a gaze coordinate P has no assigned vertex due to the fact that the gaze coordinate is situated between a number of vertices, a near vertex may be chosen in which case the object-identification of this near vertex is retrieved in the manner as disclosed before.

Subsequently, the object determination means ODM, determines the object gazed at, i.e. the helmet C6, based on the retrieved object-identification associated with the vertex mapped onto the position of said display matching said gaze coordinate P, from a repository including for each object-identification a description of the associated object optionally in combination with additional information such as data on the virtual object hierarchy: e.g. on the belonging parent virtual object or the associated child virtual objects.

It is determined that the object corresponding to gaze coordinate P at the display DP, is helmet C6 and in addition that helmet C6 is a virtual child object of the virtual parent object P1 and optionally that head C1 is an adjacent virtual child object of the helmet C6.

As said, this additional info may consist of the name of the object it belongs to optionally or additionally the name or information on the corresponding parent object or may additionally include information about the actions an object is doing, the relation of the object to the scene, etc.

The object determination module ODM, further identifies a virtual parent object of said virtual parent objects corresponding to said virtual object gazed at, based on said virtual object identified, i.e. the virtual child object C6 and an object hierarchy associated to said virtual parent object, based on the object-identification as an entry to the table and the information included in the meant table of the repository.

Vertices of the plurality of vertices are assigned an object-identification where such object identification identifies the object the vertex forms part of. In order to add this information to the objects, new vertex attribute are defined that are attached to each vertex of the plurality of vertices of a virtual scene representation.(https://www.opengl.org/sdk/docs/tutorials/ClockworkCoders/attribute s.php). For each vertex of the object in this space additional info is attached such as its object-identification.

This may be performed by either by means of storing such an object identification in a 32bit value attribute associated to a vertex.

Alternatively, this may be performed by means of conveying such an object identification by means of the Alpha channel where the meant information, the object-identification is conveyed from the repository coupled to the Object identification Retrieving Means OIRM forming part of the gazed virtual object identification determination module GVOIDM, towards the display DP included in the RGBA information. In this case, this additional info may also consist of the name of the object it belongs to optionally or additionally the name or information on the corresponding parent object.

Such, 3-Dimensional virtual object representation may be rendered in a way that is common to nowadays GPU hardware. Such additional vertex attributes conveying the object identification of the corresponding virtual object is transformed from the 3-dimensional virtual object representation into the 2-Dimensional domain, i.e. the representation of the virtual object scene at the display DP in a similar manner as the colour information.

This allows a gazed virtual object identification determination module GVOIDM to identify an object-identification of a gazed at virtual object - in this case, virtual child object represented by the respective virtual object representations C6.

The skilled person will understand that virtual objects outside of said virtual camera's view may be culled for efficiency.

In this manner, the system can implement gaze translucency, since information about what virtual objects users are looking at (*e.g.* the parts of a gazed virtual object; i.e. the virtual child object corresponding to this virtual parent object) can be used to modify for instance one or more display properties of said virtual objects. This modification can for instance be performed by a virtual object itself (*e.g.* by applying a shader), rather than on its rendering representation on the display (in other words: its pixel representation on said display). The skilled person will moreover understand that the gaze information GI, the identified virtual object(s), and the modification command(s) MC may be implemented as a (local) system property, or as events, or as parameters to function calls. Moreover, the skilled person will understand that a network module (not shown) may be used to transmit and/or receive any of the data connections that are shown, thereby facilitating networked and distributed operation.

Further, it is to be noted that although the embodiment describes a client-server architecture wherein the present invention is implemented and executed, this also could have been implemented and executed in a peer-to-peer architecture; cloud architecture, hardware architecture, and each other form in between.

The various means of the system can be located in a central way or in a more distributed manner, where these means may be distributed over the client devices and an optional server device.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

It is additionally to be noted that such virtual scene comprises a plurality of users, called objects. These objects are in the 3d space either represented as point clouds or meshes. We now wish to add extra information to these objects in the form of an object id. This object id can for example define the object itself along with its parent object. E.g. the arm of a person can have an id that encodes that this part of the object is an arm, and that this arm is part of person X. Representations in a virtual scene are commonly composed of point clouds or meshes.

Point clouds consist out of points without any physical volume, as such one need to create such a "volume" when rendering the point cloud. There are a few options in order to do this:
- Render thick points in order to avoid interpolation. Each pixel of the "thick" point gets the object id of the source point. Note that the Z-buffer takes care of the occlusions.
- Apply a mesh reconstruction technique for transforming the point cloud to a mesh E.g. poisson surface reconstruction (http://research.microsoft.com/en-us/um/people/hoppe/proj/poissonrecon/). Vertices of the mesh get the attributes of the nearest points in the point cloud.

Or alternatively, an AABB (axis aligned bounding box) which is aligned with the axes of the co-ordinate system enclosing a set of points from the point cloud or a bounding volume in general and could additionally fit simplified shapes around parts of the latter point cloud. For example a cube around the virtual person represented in points, and the simplified shapes for the arms and legs, head etc.(which could be considered as child objects).As with the previous point, vertices of the simplified shapes (meshes) get the attributes of the nearest points in the point cloud

As usual in 3D rendering, a Z-buffer is used for hiding occluded objects. The result is a rendered 2D image with colour information, and a per-pixel object id.

It is to be noted that occlusion is a phenomenon that a part of the three-dimensional position cannot be obtained because a foreground substance hides a background due to the difference in depth, and is one of the occlusion problems.

It is further to be noted that this approach, the regular 3D rendering pipeline is used which casts all objects to the camera instead of moving from the camera to the scene (as in raytracing). In order for this to work, one needs to keep track of a so-called "Z-buffer" that keeps the depth of the nearest object (to the camera) that has been projected onto each pixel. When projecting a new object, the Z-buffer is checked on a per-pixel basis to make sure that an object is only drawn when no other object was drawn before that was closer to the camera. This one of the basic principles of current "rasterized" rendering engines, and is used by the vast majority of 3D rendering engines and hardware.

While the principles of the invention have been described above in connection with specific apparatus, it is to be clearly understood that this description is merely made by way of example and not as a limitation on the scope of the invention, as defined in the appended claims.

## Claims

1. A gazed virtual object identification determination module (GVOIDM) being configured to identify, for a user, an object-identification of a gazed at virtual object of virtual objects, based on captured gaze information, said captured gaze information comprising gaze coordinates (P) representing a position at said display (DP) at which said user is looking, said display (DP) being configured to display a virtual scene representation (VSR) of a virtual scene, said virtual scene representation comprising virtual object representations (P1, P2) of virtual objects, where such virtual object may be a virtual parent objects or a virtual child object, wherein gazed virtual object identification determination module (GVOIDM) comprises:
- mapping means (MM), configured to map vertices of said virtual scene representation to a respective position at said display (DP); and
- Object identification Retrieving Means (OIRM), configured to retrieve an object identification associated with a vertex mapped onto a position at said display matching said gaze coordinate (P).

2. A gazed virtual object identification determination module (GVOIDM) according to claim 1, wherein said Object identification Retrieving Means (OIRM), is configured to retrieve said object identification from an alpha channel associated with said position at said display matching said gaze coordinate (P).

3. A gazed virtual object identification determination module (GVOIDM) according to claim 1,
wherein said Object identification Retrieving Means (OIRM), is configured to retrieve said object identification from a vertex attribute assigned to a vertex mapped onto a position at said display matching said gaze coordinate (P).

4. A system for implementing gaze translucency on a display configured to display to a user a virtual scene representation of a virtual scene on said display, said virtual scene representation comprising virtual object representations (P1, P2) of virtual objects, where such virtual object may be a virtual parent object or a virtual child object, wherein said system comprises:
- gaze capture means (GCM), configured to capture gaze information of said user, said gaze information comprising gaze coordinates (P) representing a position at said display at which said user is looking; and
- gazed virtual object identification determination module (GVOIDM) according to claim 1; and
- object determination means (ODM) configured to determine said object gazed at based on said object-identification associated with a vertex mapped onto a position at said display matching said gaze coordinate (P).

5. A system for implementing gaze translucency according to claim 4, wherein said system further comprises:
- a gaze translucency algorithm module (GTAM) configured to assign a modification command to at least one of said gazed virtual object, based on said identified gazed virtual child object.

6. A system for implementing gaze translucency according to claim 5, wherein said system further comprises:
- a virtual object modification module (VOMM) configured to modify said at least one of an identified gazed virtual object, based on an assigned modification command.

7. Computing device comprising a gazed virtual object identification determination module (GVOIDM) according to claim 1.

8. Server comprising a gazed virtual object identification determination module (GVOIDM) according to claim 1.

9. A method for implementing gaze translucency on a display configured to display to a user a virtual scene representation of a virtual scene on said display, said virtual scene representation comprising virtual object representations (P1, P2) of virtual objects, where each such virtual object may be a virtual parent objects or a virtual child object, wherein said method comprises the steps of:
- capturing gaze information of said user, said gaze information comprising gaze coordinates (P) representing a position at said display at which said user is looking; and
- mapping each vertex of said 3d virtual scene representation to a position at said display (DP); and
- retrieving an object identification associated with a vertex mapped onto said position at said display matching said gaze coordinate (P).

10. A method according to claim 9, wherein said step of retrieving said object identification is obtained from an alpha channel associated with said position at said display matching said gaze coordinate (P).

11. A method according to claim 9, wherein said step of retrieving said object identification is obtained from a vertex attribute assigned to a vertex mapped onto said position at said display matching said gaze coordinate (P).

12. A method according to any of claims 9 to 11, wherein said method further comprises the step of determining said object gazed at based on said object identification.

13. Computer program comprising computer executable instructions configured to perform when executed, the steps of method according to claim 9.
